# EUROPÄISCHE PATENTSCHRIFT

(11) **EP 0 757 169 B1**
(45) Veröffentlichungstag und Bekanntmachung des Hinweises auf die Patenterteilung: **21.11.2001**
(21) Anmeldenummer: 96111336.2
(22) Anmeldetag: 13.07.1996
(51) Int. Cl.: F02D 43/00, F02D 31/00, F02D 41/14

(54) **Einrichtung zum Regeln einer Motorgrösse, insbesondere der Leistung oder der Drehzahl eines Verbrennungsmotors**
Apparatus for controlling engine parameters, in particular the power or r.p.m. in an internal combustion engine
Dispositif pour la régulation de paramètres de moteur, en particulier la puissance ou la vitesse de rotation d'un moteur à combustion interne

(30) Priorität: 04.08.1995 AT 132895
(43) Veröffentlichungstag der Anmeldung: 05.02.1997
(73) Patentinhaber: Jenbacher Aktiengesellschaft, 6200 Jenbach/Tirol (AT)
(72) Erfinder: Chvatal, Dieter, 6200 Jenbach (AT); Lutz, Bernd, 6130 Schwaz (AT); Fahringer, Albert, 6345 Kössen (AT); Plohberger, Diethard, 6200 Jenbach (AT); Gruber, Friedrich, 6283 Hippach 172 (AT)
(74) Vertreter: Torggler, Paul Norbert, Dr.

(56) Entgegenhaltungen:
- GB-A- 2 105 878
- US-A- 4 619 230
- US-A- 4 870 822
- PATENT ABSTRACTS OF JAPAN vol. 007, no. 095 (M-209), 21.April 1983 & JP 58 018532 A (SUZUKI JIDOSHA KOGYO KK), 3.Februar 1983,

## Beschreibung

Die Erfindung betrifft eine Einrichtung zum Regeln einer Motorgröße, insbesondere der Leistung oder der Drehzahl eines Verbrennungsmotors, wobei zwei oder mehrere verstellbare Einrichtungen vorgesehen sind, über die die zu regelnde Motorgröße beeinflußbar ist. Weiters betrifft die Erfindung ein Verfahren zum Regeln einer Motorgröße, insbesondere der Leistung oder der Drehzahl eines Verbrennungsmotors, bei dem die zu regelnde Motorgröße über zwei oder mehrere verstellbare Einrichtungen regelbar ist.

Um bei einem Verbrennungsmotor, beispielsweise einem stationären Gasmotor, eine Motorgröße wie etwa die Leistung oder die Drehzahl zu regeln, stehen meist mehrere verstellbare Einrichtungen am Motor zur Verfügung. In erster Linie bietet sich dazu die Drosselklappe im Ansaugtrakt an. Bei einem aufgeladenen Verbrennungsmotor kann man aber eine Beeinflussung der Leistung oder Drehzahl beispielsweise auch über ein steuerbares Ventil erzielen, das parallel zum Verdichter (Abgasturbolader) im Ansaugtrakt des Verbrennungsmotors angeordnet ist. Um einen optimalen Wirkungsgrad des Verbrennungsmotors zu gewährleisten, hat man bereits versucht, über elektronische Regeleinrichtungen gleichzeitig zwei oder mehrere verstellbare Einrichtungen am Motor zu regeln, die alle die eigentlich zu regelnde Motorgröße beeinflussen. Solche Regelungen sind jedoch sehr komplex und aufwendig.

Aufgabe der Erfindung ist es, eine einfache Einrichtung zum Regeln einer Motorgröße eines Verbrennungsmotors bzw. ein dazu geeignetes Verfahren anzugeben, um eine im Aufbau und in der Betriebsweise einfache Regelung bereitzustellen.

Die erfindungsgemäße Einrichtung ist gekennzeichnet, durch die Merkmale nach Anspruch 1.

Im Gegensatz zum bekannten Ansatz mittels eines großen komplexen Reglers, gleichzeitig zwei oder mehrere Einrichtungen am Verbrennungsmotor zu verstellen, sieht die Erfindung nunmehr vor, für diese verstellbaren Einrichtungen jeweils einen gesonderten einfachen Regler vorzusehen. Jeder dieser Regler kann einfach aufgebaut sein und braucht bevorzugt nur eine der verstellbaren Einrichtungen zu regeln. Um die Motorgröße über einen großen Bereich regeln zu können, wird die Verstellung einer einzigen verstellbaren Einrichtung am Motor im allgemeinen nicht ausreichen. Es sind daher erfindungsgemäß zwei oder mehrere solche verstellbaren Einrichtungen vorgesehen, die jeweils von einem gesonderten Regler geregelt sind, wobei eine Umschalteinrichtung vorgesehen ist, die wahlweise einen der Regler zum Regeln der ihm zugehörigen verstellbaren Einrichtung aktiviert. Es braucht also immer nur einer der Regler samt der dazugehörigen verstellbaren Einrichtung arbeiten, während die anderen verstellbaren Einrichtungen in einer festen Stellung gehalten werden. Damit kann man die zu regelnde Motorgröße gemäß dem bevorzugten erfindungsgemäßen Verfahren in unterschiedlichen Betriebszuständen, insbesondere bei unterschiedlichen Leistungen oder Drehzahlen über Verstellung jeweils einer anderen verstellbaren Einrichtung regeln, was die Regelung erheblich vereinfacht.

Bei einem Verbrennungsmotor, bei dem in einer zu einem Verdichter parallel angeordneten Umblasleitung ein steuerbares Ventil angeordnet ist, ist es besonders günstig, wenn die zu regelnde Motorgröße in unterschiedlichen Betriebszuständen, insbesondere bei unterschiedlichen Leistungen oder Drehzahlen, über Verstellung jeweils einer anderen verstellbaren Einrichtung geregelt wird, wobei jeweils immer nur eine der verstellbaren Einrichtungen von einem zugeordneten Regler verstellt wird, während die andere(n) verstellbare(n) Einrichtung(en) in einer festen Stellung gehalten werden.

Diese Art der Regelung hat nicht nur den Vorteil einer einfachen Reglerstruktur, vielmehr kann in jedem Betriebszustand gerade jene verstellbare Einrichtung zur Regelung herangezogen werden, die bei diesem Betriebszustand die beste Einflußmöglichkeit auf die zu regelnde Motorgröße ausübt. Beispielsweise ist es bei niedrigen Drehzahl- und Leistungswerten günstig, die Drosselklappe zur Regelung heranzuziehen, weil diese in diesem Bereich bereits bei geringer Verstellung eine hohe Beeinflussung von Leistung bzw. Drehzahl hervorruft. Hingegen hat die Stellung der Drosselklappe bei größeren Leistungen und Drehzahlen nur mehr wenig Einfluß auf diese Motorgrößen und ist daher weniger geeignet, in diesem Bereich zu regeln. In diesem höheren Leistungs- und Drehzahlbereich kann man nun aber über andere verstellbare Einrichtungen am Verbrennungsmotor, beispielsweise über ein steuerbares Ventil in der Umblasleitung eines Verdichters, eine effizientere Beeinflussung der zu regelnden Motorgröße erzielen. Über die Umschalteinrichtung wird festgelegt, welcher Regler samt zugehöriger Verstelleinrichtung gerade aktiv regelt, während die anderen verstellbaren Einrichtungen in einer festen Stellung gehalten werden.

Weitere Vorteile und Einzelheiten der Erfindung werden anhand der nachstehenden Figurenbeschreibung näher erläutert.

Es zeigen:
Fig. 1 ein Ausführungsbeispiel einer erfindungsgemäßen Einrichtung in schematischer Darstellung,
Fig. 2 ein Ausführungsbeispiel der erfindungsgemäßen Einrichtung in einem detaillierteren Blockschaltbild,
Fig. 3 eine typische Verdichterkennlinie.

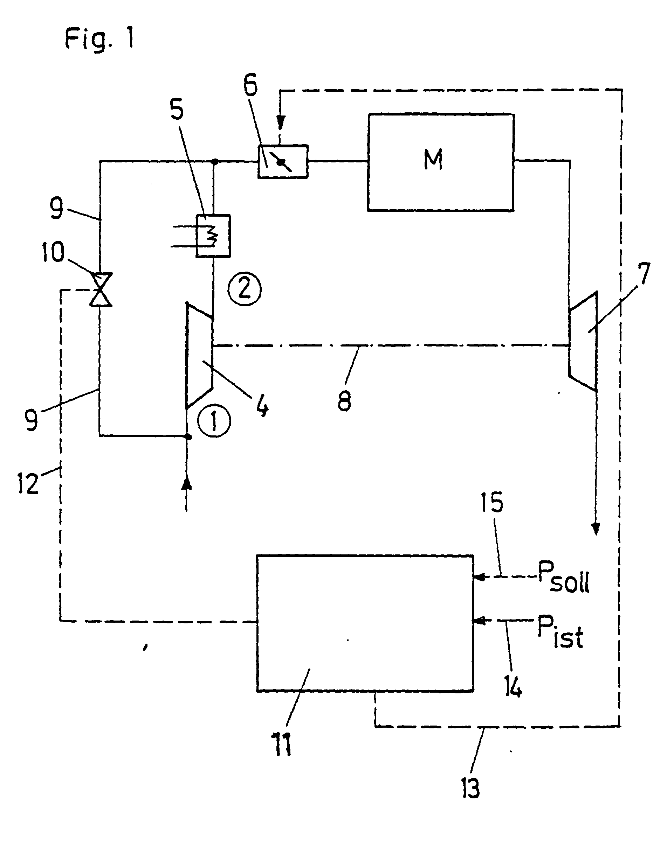

Bei dem in Fig. 1 dargestellten Ausführungsbeispiel wird ein Verbrennungsmotor über einen Verdichter 4 gespeist, wobei das verdichtete Gas bzw. Gasgemisch über einen Ladeluftkühler 5 und eine Drossel 6 in den Verbrennungsmotor M gelangt. Die Abgase treiben die Turbine 7 an, welche über eine Welle 8 die Verdichterschaufeln antreibt (Abgasturbolader). Um ein unerwünschtes Pumpen (engl. "surge") im Ansaugtrakt zu vermeiden, ist eine Umblasleitung 9 (Rückführleitung) parallel zum Verdichter 4 vorgesehen, in der ein vorzugsweise elektrisch regelbares Proportionalventil 10 angeordnet ist. Durch Öffnen des Ventils 10 kann der Gasstrom durch den Verdichter erhöht und der Druck nach dem Verdichter verringert werden und damit das Pumpen vermieden werden.

Um die Leistung des Verbrennungsmotors M zu regeln, ist eine Einrichtung 11 vorgesehen, die über Steuerleitungen 12 und 13 zwei verstellbare Einrichtungen regelt, über die die zu regelnde Leistung beeinflußbar ist. Beim dargestellten Ausführungsbeispiel sind diese verstellbaren Einrichtungen einerseits die Drosselklappe 6 im Ansaugtrakt des Verbrennungsmotors M und andererseits das steuerbare Ventil 10 in der Umblasleitung 9. Der Einrichtung 11 wird über den Eingang 14 der momentane Istwert der Leistung Pᵢₛₜ zugeführt. Über dem Sollwerteingang 15 wird ein Sollwert für die gewünschte Leistung Pₛₒₗₗ bereitgestellt.

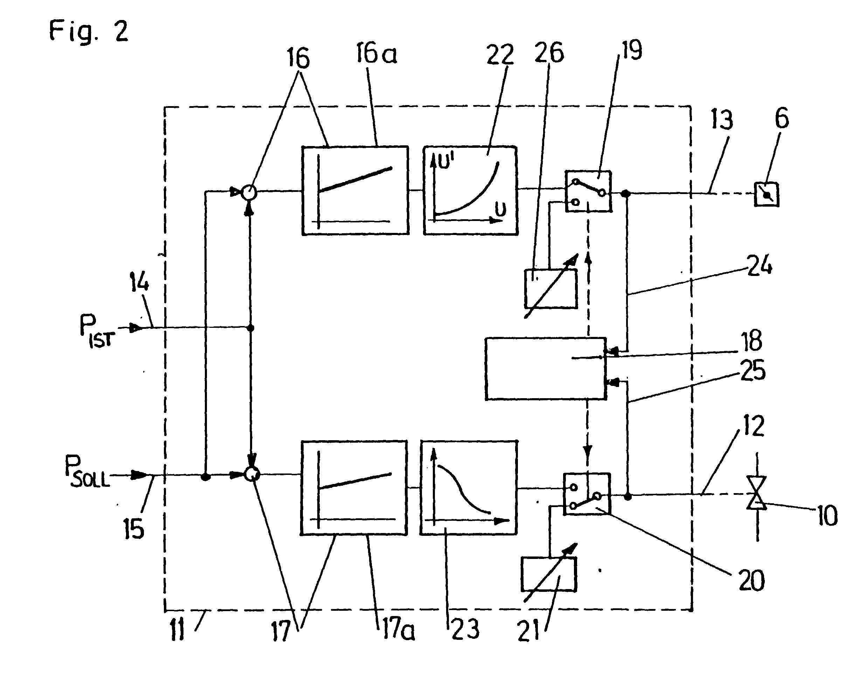

Wie die Fig. 2 zeigt, sind zwei gesonderte Regler 16 und 17 vorgesehen, von denen jeder jeweils eine verstellbare Einrichtung 6 bzw. 10 in Abhängigkeit vom erfaßten Istwert Pᵢₛₜ der Leistung und von einem vorgebbaren Sollwert Pₛₒₗₗ der Leistung regelt. Weiters ist eine Umschalteinrichtung 18 vorgesehen, über die wahlweise einer der Regler 16 oder 17 über die Schalteinheiten 19 bzw. 20 zum Regeln der ihm zugehörigen Verstelleinrichtung 6 bzw. 10 aktivierbar ist. Die Umschalteinrichtung 18 ist dabei so ausgelegt, daß sie immer nur einen der beiden Regler 16 bzw. 17 aktiviert, das heißt die vom jeweiligen Regler abgegebene Stellgröße über die Schalteinheit 19 bzw. 20 tatsächlich der verstellbaren Einrichtung 6 bzw. 10 zuführt.

Bei der in Fig. 2 gezeigten Stellung befindet sich der Verbrennungsmotor im niedrigen Leistungsbereich, in dem die Leistungsregelung über die Drosselklappe 6 erfolgt, das heißt, der Regler 16 ist aktiv, während der Regler 17 in dem Sinn inaktiv ist, daß sein Ausgangssignal nicht das Ventil 10 regelt. Vielmehr ist das Ventil 10 über die Schalteinheit 20 mit einer Einrichtung 21 zur Abgabe eines voreinstellbaren elektrischen Stellsignals verbunden, die beispielsweise ein Signal abgibt, das das Ventil 10 in der Umblasleitung 9 im niedrigen Leistungsbereich voll öffnet.

Jeder Regler 16 bzw. 17 weist günstigerweise eine PID-Regeleinheit 16a,17a auf. Zwischen dem Regler 16 bzw. 17 und der zugehörigen verstellbaren Einrichtung 6 bzw. 10 ist günstigerweise jeweils ein nichtlineares Übertragungsglied 22 bzw. 23 eingebaut, um in verschiedenen Leistungsbereichen unterschiedliche Verstärkungen zu liefern. Damit kann z.B. der Umstand, daß die Drosselklappe in höherem Leistungsbereich kaum mehr einen Einfluß auf die Leistung hat, durch Erhöhung des Verstärkungsgrades in diesem Leistungsbereich zumindest teilweise kompensiert werden. Dazu weist beispielsweise das Übertragungsglied 22 eine zur Drosselklappenkennlinie inverse Kennlinie auf, die das Ausgangssignal U des Reglers 16 mit nichtlinearer Verstärkung in ein Ausgangssignal U' umwandelt, das letztlich der Drosselklappe 6 zugeführt wird.

Beim dargestellten Ausführungsbeispiel ist die Umschalteinrichtung 18 über die Leitungen 24 bzw. 25 in Abhängigkeit von der Stellung der verstellbaren Einrichtung 6,10 bzw. den diesen Einrichtungen zugeführten elektrischen Stellsignalen gesteuert und zwar derart, daß in einem unteren Leistungsbereich bis zum vollen Öffnen der Drosselklappe 6 eine Regelung über die Drosselklappenstellung erfolgt, während das Ventil 10 voll geöffnet ist und daß ab dem Erreichen der vollen Drosselklappenstellung eine Umschaltung der Schalteinheit 19 und 20 erfolgt. Dann hält die Einrichtung 26 durch Abgabe eines entsprechenden voreinstellbaren elektrischen Stellsignals die Drosselklappe in voll geöffneter Stellung und der aktivierte Regler 17 schließt mit zunehmender gewünschter Leistung das Ventil 10 immer weiter, bis schließlich bei Erreichen der vollen Leistung bei voll geöffneter Drosselklappe 6 das Ventil 10 voll geschlossen ist.

Die Umschalteinrichtung 18 könnte auch in Abhängigkeit vom erfaßten Istwert Pᵢₛₜ oder Sollwert Pₛₒₗₗ der zu regelnden Motorgröße, nämlich im vorliegenden Ausführungsbeispiel der Leistung gesteuert sein und zwar so, daß die Umschalteinrichtung immer nur einen der beiden Regler 16 oder 17 aktiviert.

Das erfindungsgemäße Verfahren, welches sich beispielsweise mit den oben beschriebenen Einrichtungen verwirklichen läßt, ist dadurch gekennzeichnet, daß die zu regelnde Motorgröße in unterschiedlichen Betriebszuständen, insbesondere bei unterschiedlichen Leistungen oder Drehzahlen, über Verstellung jeweils einer anderen verstellbaren Einrichtung geregelt wird, wobei jeweils immer nur eine der verstellbaren Einrichtungen von einem zugeordneten Regler verstellt wird, während die andere(n) verstellbare(n) Einrichtung(en) in einer festen Stellung gehalten werden.

Besonders bevorzugt ist bei einem Verbrennungsmotor, bei dem in einer zu einem Verdichter parallel angeordneten Umblasleitung ein steuerbares Ventil angeordnet ist, ein Verfahren, bei dem im unteren Leistungs- oder Drehzahlbereich des Verbrennungsmotors das steuerbare Ventil ständig vollgeöffnet ist und die Leistung oder Drehzahl über die Stellung der Drosselklappe im Ansaugtrakt geregelt wird, und daß in einem oberen Leistungs- oder Drehzahlbereich die Drosselklappe ständig voll geöffnet ist und die Leistung oder Drehzahl über den Öffnungsgrad des steuerbaren Ventils geregelt wird.

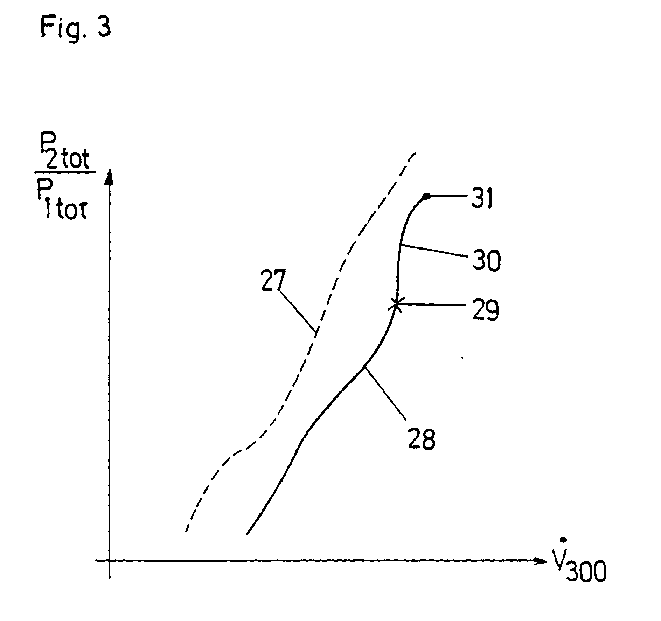

Mit einem solchen Verfahren läßt sich ein aufgeladener Verbrennungsmotor auf einfache Weise in der Leistung regeln, wobei man im Verdichterkennliniendiagramm gemäß Fig. 3 immer unter der sogenannten Pumpgrenze 27 bleibt. In diesem Diagramm ist das Druckverhältnis der Totaldrücke P₂ₜₒₜ/P₁ₜₒₜ über einem normierten Gasdurchsatz V̇₃₀₀ aufgetragen. Solche Verdichterkennlinien werden von den Herstellern der Verdichter geliefert und beinhalten insbesondere die eingezeichnete Pumpgrenze 27, oberhalb derer unerwünschtes Pumpen im Ansaugtrakt des Verbrennungsmotors auftritt. Nach dem beschriebenen bevorzugten Ausführungsbeispiel des erfindungsgemäßen Verfahrens kann man nun im niedrigen Leistungsbereich gemäß der Linie 28 die Leistung über die Drosselklappe regeln, während das Ventil 10 in der Umblasleitung voll geöffnet ist. Am Punkt 29 erfolgt dann eine Umschaltung auf eine Regelung über die Stellung des Ventils 10, während die Drosselklappe 6 voll geöffnet ist. Dies ist der Bereich 30 in Fig. 3. Schließlich erreicht man in Punkt 31 die Nennleistung bei (nahezu) voll geöffneter Drosselklappe 6 und (nahezu) voll geschlossenem Ventil 10. Immer bewegt man sich sicher unterhalb der Pumpgrenze 27, wobei Messungen ergeben haben, daß ein weiteres Annähern an die Pumpgrenze den Wirkungsgrad des Motors nur unwesentlich erhöht, sodaß man durch einen Sicherheitsabstand mit der einfachen erfindungsgemäßen Regelung keine relevanten Nachteile im Hinblick auf den Wirkungsgrad des Motors hat.

Die Erfindung ist selbstverständlich nicht auf die dargestellten Ausführungsbeispiele beschränkt, beispielsweise lassen sich auch andere Motorgrößen, insbesondere die Drehzahl gemäß den erfindungsgemäßen Ideen regeln. Günstig ist es sicherlich, wenn die Umschalteinrichtung 18 automatisch den jeweils zu aktivierenden Regler auswählt. Grundsätzlich wäre es aber auch denkbar, hier eine händische Umschaltung vorzunehmen. Besonders einfach ist die Reglerstruktur dann, wenn jeder Regler immer nur eine einzige verstellbare Einrichtung am Verbrennungsmotor regelt. Grundsätzlich wäre es jedoch auch denkbar, daß ein Regler einen Satz von wenigen verstellbaren solchen Einrichtungen regelt, während der andere Regler eine andere verstellbare Einrichtung oder ebenfalls einen Satz von verstellbaren Einrichtungen regelt.

## Patentansprüche

1. Einrichtung zum Regeln einer Motorgröße, insbesondere der Leistung oder der Drehzahl eines Verbrennungsmotors, wobei zwei oder mehrere verstellbare Einrichtungen vorgesehen sind, über die die zu regelnde Motorgröße beeinflußbar ist, **dadurch gekennzeichnet, daß** zwei oder mehrere gesonderte Regler (16,17) vorgesehen sind, von denen jeder jeweils eine der verstellbaren Einrichtungen (6,10) in Abhängigkeit vom erfaßten Istwert (Pᵢₛₜ) der Motorgröße und von einem vorgebbaren Sollwert (Pₛₒₗₗ) regelt, und daß weiters eine Umschalteinrichtung (18) vorgesehen ist, über die wahlweise einer der Regler (16,17) zum Regeln der ihm zugehörigen verstellbaren Einrichtung (6,10) aktivierbar ist, wobei die Umschalteinrichtung (18) in Abhängigkeit von der Stellung der verstellbaren Einrichtungen (6,10) bzw. den diesen Einrichtungen (6,10) zugeführten elektrischen Stellsignalen gesteuert ist oder die Umschalteinrichtung (18) in Abhängigkeit vom Istwert oder Sollwert der zu regelnden Motorgröße gesteuert ist.

2. Einrichtung nach Anspruch 1, **dadurch gekennzeichnet, daß** eine der verstellbaren Einrichtungen die Drosselklappe (6) im Ansaugtrakt des Verbrennungsmotors (M) ist.

3. Einrichtung nach Anspruch 1 oder Anspruch 2, **dadurch gekennzeichnet, daß** eine der verstellbaren Einrichtungen ein steuerbares Ventil (10) ist, das in einer parallel zu einem im Ansaugtrakt angeordneten Verdichter (4), vorzugsweise Abgasturbolader, liegenden Umblasleitung (9) angeordnet ist.

4. Einrichtung nach einem der Ansprüche 1 bis 3, **dadurch gekennzeichnet, daß** jeder Regler (16,17) eine PID-Regeleinheit (16a,17b) aufweist.

5. Einrichtung nach einem der Ansprüche 1 bis 4, **dadurch gekennzeichnet, daß** zwischen dem Regler (16,17) und der zugehörigen verstellbaren Einrichtung (6,10) ein nichtlineares Übertragungsglied (22,23) eingebaut ist.

6. Einrichtung nach einem der Ansprüche 1 bis 5, **dadurch gekennzeichnet, daß** für jede verstellbare Einrichtung (6,10) abgesehen vom zugehörigen Regler (16,17) eine Einrichtung (21,26) zur Abgabe eines voreinstellbaren elektrischen Stellsignals vorgesehen ist, und die Umschalteinrichtung (18) wahlweise den Ausgang des Reglers (16,17) oder den Ausgang der Stellsignal-Einrichtung (21,26) auf die verstellbare Einrichtung (6,10) schaltet.

7. Einrichtung nach einem der Ansprüche 1 bis 6, **dadurch gekennzeichnet, daß** die Umschalteinrichtung (18) immer nur einen der Regler (16,17) samt zugehöriger verstellbarer Einrichtung (6,10) zum Regeln der Motorgröße aktiviert.

## Claims

1. Apparatus for regulating an engine parameter, in particular the output power or the speed of rotation of an internal combustion engine, wherein there are provided two or more adjustable devices by way of which the engine parameter to be regulated can be influenced, **characterised in that** there are provided two or more separate regulators (16, 17), each of which regulates a respective one of the adjustable devices (6, 10) in dependence on the detected actual value (Pᵢₛₜ) of the engine parameter and a predeterminable reference value (Pₛₒₗₗ) and that in addition there is provided a change-over switching device (18) by way of which selectively one of the regulators (16, 17) can be activated for regulating the adjustable device (6, 10) associated therewith, wherein the change-over switching device (18) is controlled in dependence on the position of the adjustable devices (6, 10) or the electrical control signals fed to said devices (6,10) or the the change-over switching device (18) is controlled in dependence on the actual value or the reference value of the engine parameter to be regulated.

2. Apparatus according to claim 1 **characterised in that** one of the adjustable devices is the throttle flap valve (6) in the induction tract of the internal combustion engine (M).

3. Apparatus according to claim 1 or 2 **characterised in that** one of the adjustable devices is a controllable valve (10) which is arranged in a bypass blowing duct (9) disposed parallel to a compressor (4) arranged in the induction tract, preferably an exhaust gas turbocharger.

4. Apparatus according to one of claims 1 through 3 **characterised in that** each regulator (16, 17) has a PID-regulating unit (16a, 17b).

5. Apparatus according to one of claims 1 through 4 **characterised in that** a nonlinear transmission member (22,23) is installed between the regulator (16, 17) and the associated adjustable device (6, 10).

6. Apparatus according to one of claims 1 through 5 **characterised in that** for each adjustable device (6, 10), apart from the associated regulator (16, 17), there is provided a device (21, 26) for the output of a presettable electrical control signal, and the change-over switching device (18) selectively switches the output of the regulator (16, 17) or the output of the control signal device (21, 26) to the adjustable device (6, 10).

7. Apparatus according to one of claims 1 through 6 **characterised in that** the change-over switching device (18) only ever activates one of the regulators (16, 17) with associated adjustable device (6,10) for regulating the engine parameter.

## Revendications

1. Dispositif pour la régulation d'un paramètre moteur, en particulier la puissance ou la vitesse de rotation d'un moteur à combustion, deux dispositifs réglables ou plus étant prévus, par l'intermédiaire desquels le paramètre moteur à régler peut être influencé, **caractérisé en ce que** deux régulateurs (16,17) séparés ou plus sont prévus, dont chacun règle respectivement l'un des dispositifs réglables (6,10) en fonction de la valeur réelle (P_{réelle}) saisie du paramètre moteur et d'une valeur de consigne (P_{consigne}) susceptible d'être prédéterminée, et **en ce qu'**en outre est prévu un dispositif de commutation (18), par l'intermédiaire duquel à volonté l'un des régulateurs (16,17), prévu pour régler le dispositif réglable (6,10) qui lui est associé, est activable, le dispositif de commutation (18) étant commandé en fonction de la position des dispositifs réglables (6,10), respectivement des signaux de réglage électriques amenés à ces dispositifs (6,10), ou bien le dispositif de commutation (18) est commandé en fonction de la valeur réelle ou de la valeur de consigne des paramètres moteur à régler.

2. Dispositif selon la revendication 1, **caractérisé en ce que** l'un des dispositifs réglables est le clapet d'étranglement (6) monté dans le tronçon d'aspiration du moteur à combustion (M).

3. Dispositif selon la revendication 1 ou 2, **caractérisé en ce que** l'un des dispositifs réglables est une soupape susceptible d'être commandée (10), qui est disposée dans une conduite de contournement de soufflage (9) située parallèlement à un compresseur (4) disposé dans le tronçon d'aspiration, de préférence un turbocompresseur entraîné par les gaz d'échappement.

4. Dispositif selon l'une des revendications 1 à 3, **caractérisé en ce que** chaque régulateur (16,17) présente une unité de régulation à caractéristique proportionnelle-intégrale-différentielle (16a,16b).

5. Dispositif selon l'une des revendications 1 à 4, **caractérisé en ce que**, entre le régulateur (16,17) et le dispositif réglable (6,10) afférent, est intégré un organe de transmission (22,23) à caractéristique non linéaire.

6. Dispositif selon l'une des revendications 1 à 5, **caractérisé en ce que**, pour chaque dispositif réglable (6,10), abstraction du régulateur (16,17) qui y est associé, est prévu un dispositif (21,26) devant fournir un signal de réglage électrique préréglable et le dispositif de commutation (18) commutant à volonté la sortie du régulateur (16,17), ou la sortie du dispositif à signal de réglage (21,26), sur le dispositif réglable (6,10).

7. Dispositif selon l'une des revendications 1 à 6, **caractérisé en ce que** le dispositif de commutation (18) active toujours uniquement l'un des régulateurs (16,17) avec le dispositif réglable (6,10) qui y est associé, dans le but de régler le paramètre moteur.
